# EUROPÄISCHE PATENTSCHRIFT

(11) **EP 2 283 322 B1**
(45) Veröffentlichungstag und Bekanntmachung des Hinweises auf die Patenterteilung: **11.07.2012**
(21) Anmeldenummer: 09765713.4
(22) Anmeldetag: 26.05.2009
(51) Int. Cl.: G01D 5/244, G01D 5/20

(54) **VERFAHREN UND SCHALTUNGSANORDNUNG ZUR ÜBERWACHUNG EINES DREHWINKELAUFNEHMERS**
METHOD AND CIRCUIT ARRANGEMENT FOR MONITORING A ROTATIONAL ANGLE SENSOR
PROCÉDÉ ET CIRCUITERIE DE SURVEILLANCE D'UN CAPTEUR D'ANGLE DE ROTATION

(30) Priorität: 25.05.2008 DE 102008024527
(43) Veröffentlichungstag der Anmeldung: 16.02.2011
(73) Patentinhaber: Lenze Automation GmbH, 31855 Aerzen (DE)
(72) Erfinder: EUTEBACH, Thomas, 31785 Hameln (DE)
(74) Vertreter: Leonhard, Frank Reimund
(86) Internationale Anmeldenummer: PCT/EP2009/056335
(87) Internationale Veröffentlichungsnummer: WO 2009/153133

(56) Entgegenhaltungen:
- WO-A2-2004/070924
- DE-A1-102005 001 702

## Beschreibung

Die Erfindung betrifft ein Verfahren und eine Schaltungsanordnung zur Überwachung eines Drehwinkelaufnehmers an einer elektrischen Maschine und findet in Meßsystemen auf Resolverbasis Anwendung.

Zur Lageerfassung von bewegten Maschinenteilen und Antrieben haben sich Resolver als zuverlässige und kostengünstige Elemente im industriellen Einsatz bewährt. Wenn das Maschinenregelverfahren oder die Anwendung eine Winkelbestimmung verlangt, werden Resolver sehr häufig wegen ihres robusten Aufbaus eingesetzt. Der Resolver ist ein Positions- bzw. Winkelmesssystem, das auf einem induktiven Prinzip beruht und in seinem Aufbau einem Elektromotor mit Präzisionswicklungen gleicht. Es gibt einen Absolutwert als Messwert ab. Der Stator des Resolvers trägt zwei Wicklungsgruppen, deren Wicklungsebenen senkrecht aufeinander stehen und räumlich gegeneinander versetzt sind (Wₛᵢₙ, W_{cos}). Der Rotor bildet einen Drehtransformator, der primärseitig über eine mit Strom beaufschlagte Erregerwicklung versorgt wird (W_{Ref}) und zur Sekundärseite mit den Statorwicklungen induktiv gekoppelt ist.

Vom Arbeitsprinzip hier ist ein Resolver so ausgebildet, dass eine eingangsseitige Erregung mit einem Trägerfrequenzsignal erfolgt und dieses Signal durch die Resolver-Rotorbewegung amplitudenmoduliert und auf die Ausgangsseite transformiert wird. Aufgrund der orthogonalen Anordnung der Statorwicklungen haben die amplitudenmodulierten Ausgangssignale 90° Phasenversatz zueinander und stehen zur weiteren Auswertung zur Verfügung. Es gibt mehrere Auswerteverfahren für Resolver.

Die Anwendung eines Resolvers kann unterschiedlich sein. Gelegentlich wird nicht der Drehwinkel, sondern die Winkelgeschwindigkeit gemessen und integriert. Ausschlaggebend ist aber, dass man entweder direkt oder indirekt, beispielsweise durch eine Integration die (absolute) Winkellage des Rotors gegenüber dem Stator ermitteln kann. Die Winkelinformation oder die Drehzahlinformation wird einem Frequenzumrichter oder einer anderen elektronischen Motorsteuerung zugeführt und dient dort der Steuerung von Drehzahl und/oder Drehmoment.

Wenn der Resolver aus irgendeinem Grund versagt, dann bekommt die elektronische Motorsteuerung kein Signal. Unter Versagen sollen alle Zustände verstanden werden, in denen nicht das richtige Drehwinkelsignal an der Motorsteuerung ankommt. Es kann sich beispielsweise um eine Unterbrechung der Signalleitung zwischen dem Resolver und der Motorsteuerung handeln. Wenn die Motorsteuerung nicht das richtige Signal erhält, dann führt dies im Betrieb zu einem falschen Verhalten. So kann es vorkommen, dass eine Motorsteuerung, bei Verwendung einer heute üblichen Stromvektorregelung mit Drehzahlrückführung, die Drehzahl des Motors auf sein Maximum treibt, wenn eine Signalleitung unterbrochen wird. Es liegt auf der Hand, dass derartige Betriebszustände unerwünscht sind.

Im Stand der Technik sind mehrere Vorrichtungen und Verfahren bekannt, um derartige Fehlersituationen in Verbindung mit Drehwinkelaufnehmern zu entdecken, um danach Maßnahmen zur Fehlerkorrektur oder zumindest zur Fehlerbehandlung einzuleiten. Beispielsweise kann man den Drehwinkelaufnehmer redundant ausbilden, d.h. einen zweiten Drehwinkelaufnehmer vorsehen, und die Ergebnisse der beiden Drehwinkelaufnehmer miteinander vergleichen. Man kann auch die Funktion des Drehwinkelaufnehmers mit Hilfe einer eingebauten Kontrollelektronik überwachen.

Es ist weiter bekannt, einen Drahtbruch in den hin- und zurückführenden Leitungen des Resolvers zu erkennen, der in elektrischen Maschinen zur Winkelbestimmung eingesetzt ist.

Um drahtbruch-basierende Fehler in der Winkelbestimmung erkennen zu können, werden üblicherweise die Eingangs- und Ausgangssignale der Resolverwicklungen Wₛᵢₙ, W_{cos}, W_{Ref} schaltungstechnisch zurückgekoppelt und der Stromfluss durch diese Wicklungen ausgewertet. Damit werden die hin- und zurückführenden Leitungen inklusive der angeschlossenen Wicklungen überwacht. Eine direkte Überwachung der Wicklungen des im Rotor liegenden Drehtransformators ist damit allerdings nicht möglich. Eine Überwachung dieser Wicklung kann nur indirekt geschehen und hier hat das eingesetzte Resolverauswerteverfahren einen entscheidenden Einfluss auf die anwendbaren Möglichkeiten.

Ein gebräuchliches Resolverauswerteverfahren ist das sogenannte Rückwärtsverfahren, bei dem die orthogonalen Wicklungen des Resolvers als Wₛᵢₙ und W_{cos} so bestromt werden, dass in der Erregerwicklung als W_{Ref} keine Spannung induziert wird. Wird in diesem Zustand des Signalgleichgewichts der Resolverrotor verdreht, dann wird dieses Gleichgewicht gestört und eine Spannung in die Erregerwicklung W_{Ref} übertragen. Diese Spannung wird in diesem Verfahren einem Regler zugeführt (dem sogenannten Nachlaufregler), der die Spannungsamplituden an den orthogonalen Wicklungen derart korrigiert, dass die Spannung an der Erregerwicklung wieder Null Volt wird und das Signalgleichgewicht wieder hergestellt ist. Da der Rotor des Resolvers ein Drehtransformator mit entsprechenden Wicklungen ist, können über ihn naturgemäß nur Wechselsignale übertragen werden. Aus diesem Grund handelt es sich bei den Eingangssignalen des Resolvers um amplitudenmodulierte Trägerfrequenzsignale.

Die vollständige Überwachung eines Systems, dass auf dem zuvor beschriebenem Nachlaufregelungsprinzip beruht, gestaltet sich als schwierig. In einem solchen System wird im "Normalzustand" (wenn der Nachlaufregelkreis ausgeregelt ist) ca. Null Volt am Eingangsverstärker gemessen. Die gleiche Spannungsamplitude liegt aber auch dann an, wenn ein Drahtbruch in den Drehtransformatorwicklungen des Resolvers vorliegt. Damit sind Fehler innerhalb des Resolvers nicht zu erkennen.

Ein möglicher Ansatz zur Erkennung eines derartigen Fehlers ist die Aufschaltung eines sogenannten Prüffehlwinkels. Damit erhält der Nachlaufregelkreis nicht den Sollwert gleich Null Volt, sondern ungleich Null Volt. In einem solchen System ist im ausgeregelten Zustand das Signal am Eingangsverstärker ebenfalls ungleich Null Volt und ein Drahtbruch wäre damit erkennbar.

Üblicherweise ist der Eingangsverstärker aber so dimensioniert, dass schon geringe Fehlwinkel, die beispielsweise während dynamischer Vorgänge auftreten, den Eingangsverstärker voll aussteuern. Diese hohe Verstärkung ist notwendig, weil erst dadurch der Regelkreis in der Lage ist, sehr dynamischen Bewegungsvorgängen folgen zu können. Messungen haben gezeigt, dass der Prüffehlwinkel in der Größenordnung von ca. 1° liegen muss, um ihn zweifelsfrei identifizieren zu können, vgl. WO 2004/070924 (Lenze). Bedauerlicherweise führen diese Tatsache und die notwendige hohe Verstärkung des Eingangsverstärkers zu einer ersichtlich unsymmetrischen Aussteuerung des Eingangsverstärkers, was die Regelkreisstabilität beeinflusst. Dieses Verfahren ist daher nicht immer anwendbar. DE-A 10 2005 001 702 (Mitsubishi) versucht die Leitungsbruch-Erfassung über einen Pull-up-Widerstand zu erreichen, vgl. dort Abs. [0016], [0017]. Werden aber beide Eingänge des Differenzverstärkers "hochgezogen", steigt der Einfluss der Gleichtaktunterdrückung.

**Aufgabe der Erfindung** ist es, eine Überwachung eines Drehwinkelaufnehmers an einer elektrischen Maschine zu schaffen, mit der ein nachteiliger Einfluss auf den Regelkreis vermieden wird und die Stabilität und Sicherheit erhöht werden kann.

Diese Aufgabe wird mit einem Überwachungsverfahren eines Drehwinkelsaufnehmers gemäß den Merkmalen des Anspruchs 1 (Verfahren) oder/und Anspruch 11 (Vorrichtung zur Überwachung eines Drehwinkelaufnehmers) gelöst.

Gemäß der erfindungsgemäßen Lösung wird ein Fehler und/oder ein Drahtbruch in den Drehtransformator-Wicklungen des Drehwinkelaufnehmers, z.B. als Resolver, erkannt.

Mit der erfindungsgemäßen Lösung erfolgt also die zuverlässige Überwachung eines Drehwinkelsaufnehmers. Dies mittels Generierung eines Störsignals im Sekundenrhythmus. Dieses gezielte Störsignal wird alternierend den beiden orthogonalen Wicklungen des Drehwinkelaufnehmers vorgegeben.

Nach Auswertung über einen Eingangsverstärker und Überwachung wird ein Störanzeigesignal am Ausgang des Eingangsverstärkers zu einem Signal ungleich Null Volt, wenn kein Fehler oder kein Bruch im System besteht, und zu einem Signal gleich Null Volt, wenn ein Fehler oder ein Bruch im System besteht (Anspruch 1).

Nach der Fehlerkorrektur wird eine weitere Auswertung und Überwachung durchgeführt (Anspruch 2).

Für die Überwachung des Drehwinkelaufnehmers an der elektrischen Maschine ist eine sogenannte funktionelle Fehlererkennung (strukturell als "Block" benannt) von Bedeutung, die aus einem Störsignalgenerator, einem Signalauswertungsblock und einem Schalter besteht. Er ist mit dem Trägerfrequenzgenerator verbunden (Anspruch 11).

Bei der Überwachung generiert der Störsignalgenerator im Sekundenrhythmus, alternierend für beide Wicklungen Wₛᵢₙ, W_{cos} des Drehwinkelaufnehmers, ein gezieltes Störsignal (als δᵢ;i=1,...), das über einen Eingangsverstärker ausgewertet und überwacht wird. Ist das Störanzeigesignal am Ausgang des Eingangsverstärkers ein Signal, das ungleich Null Volt ist, liegt kein Fehler oder kein Bruch im System vor. Das Signal entspricht Null Volt, wenn ein Fehler oder ein Bruch in dem System vorliegt.

So funktionieren die Schaltungsanordnung des Überwachungssystems und das Verfahren zur Überwachung. Sie können kombiniert werden (Anspruch 13).

Zur Erläuterung eines Drehwinkelaufnehmers, der als Resolver gestaltet sein kann, soll erwähnt werden, dass es sich jeweils um ein magnetisch gekoppeltes System handelt, was durch die eingangs umschriebene Situation des Drehtransformators zum Ausdruck kommt. Es gibt eine rotierende Wicklung und es gibt zwei stationäre Wicklungen, letztere als Statorwicklungen benannt. Die rotierende Wicklung wird Rotorwicklung genannt, oder aber auch "Erregerwicklung". Für das Beispiel des Resolvers als Drehwinkelsaufnehmer, kurz auch "Geber" genannt, soll folgende Erläuterung gegeben werden.

Der Resolver besitzt eine Erregerwicklung auf der Primärseite (als drehende Wicklung) und zwei orthogonal zueinander angeordnete sekundärseitige Wicklungen des Stators (als ruhende Wicklungen) und bildet mechanisch ein trigonometrisches Additionstheorem nach.

Beim "Rückwärtsverfahren" wird der Resolver nicht, wie eigentlich konstruktiv vorgesehen, über die Erregerwicklung mit Strom versorgt, sondern es werden die beiden sekundärseitigen Wicklungen "bestromt" und das Übertragungsergebnis in der Erregerwicklung über den Eingangsverstärker gemessen. Dies ist die Folge oder Reaktion auf das Trägersignal.

Die Bestromung der beiden Sekundärwicklungen geschieht in einer Weise, dass sich die Felder der beiden Sekundärwicklungen aufheben und in die Erregerwicklung keine Spannung induziert wird. Wird doch etwas in die Erregerwicklung induziert, korrigiert ein Regelkreis die Amplituden an den beiden (ruhenden) Sekundärwicklungen, bis das Signal an der Erregerwicklung wieder Null ist.

Mathematische Grundlage bildet dabei das Additionstheorem, das durch den Resolver nachgebildet wird.

Wenn von dem Signal Null gesprochen wird, versteht sich dieses Signal als Wechselsignal, da die Trägerfrequenzsignale aus den Statorwicklungen als Wechselsignal in der Erregerwicklung (als drehfähige Wicklung, hier im Sinne einer Empfangswicklung verwendet) induzieren. Der Regelkreis sorgt für den eingeschwungenen Zustand und dafür, dass am Eingang des Eingangsverstärkers, oder entsprechend auch an seinem Ausgang kein Wechselsignal anliegt, also sinngemäß das Wechselsignal Null ist (eine Messung per Effektivwert empfiehlt sich).

Dieser Nullfall stellt sich aber auch ein, wie eingangs im Stand der Technik angegeben, wenn das Übertragungsverhältnis ü gestört ist und ein Fehler oder ein Drahtbruch im Wicklungssystem des Resolvers vorliegt. Hier wird mit der Erfindung dafür Sorge getragen, dass mit kurzen Impulsen, im Anspruch 1 als "Generierung von Störsignalen im Sekundenrhythmus" bezeichnet, Unsymmetrien eingespeist werden, die ein Wechselsignal entstehen lassen, vgl. viertes Merkmal des Anspruchs 1. Als Folge des Störsignals wird das Anzeigesignal am Eingang und auch am Ausgang des Eingangsverstärkers entstehen. Es ist ein Wechselsignal ungleich Null in dem Sinne, dass ein Wechselsignal mit einer Amplitude und einem Effektivwert vorhanden ist, und es kann davon ausgegangen werden, dass kein Fehler oder Drahtbruch im System des Resolvers vorliegt. Wäre ein solcher Fehler vorhanden, würde bei dem einen oder anderen Störsignal kein Wechselsignal entstehen und das Signal wäre gleich Null, mit anderen Worten als Wechselsignal nicht vorhanden. Dann kann darauf geschlossen werden, dass ein Fehler oder Drahtbruch im System des Resolvers vorliegt.

Um symmetrisch zu sein, wird das Störsignal abwechselnd in der einen und in der anderen Wicklung generiert. Fehler in beiden Wicklungen können so erkannt werden.

Die Angabe, dass das Signal im Sekundenrhythmus stattfindet, sagt aus, dass es eine Signal-Folgezeit hat, die wesentlich größer ist, als die Signal-Aktivzeit, in der das Störsignal aktiv eine Spannung der Wicklungen stört, in dem Sinne, dass sie unterdrückt wird, oder die Trägerfrequenz abgeschaltet oder unterdrückt wird.

Dies geschieht nach Art eines Dirac-Stoßes, der sinngemäß durch das Symbol δ für die Störsignale symbolisiert wird, wobei i=1, ..., n eine Folge von Störsignalen symbolisiert, deren Impulsbreite klein gegenüber der Wiederholzeit ist.

Dieses ist sinngemäß unter dem Störsignal im Sekundenrhythmus zu verstehen, das sich alternierend in der einen und der anderen der beiden Wicklungen auswirkt.

Die Signalspannung für diese Wicklungen, später in der detaillierten Beschreibung U₁ und U₂ genannt, werden alternierend auf Null gesetzt und damit wird eine Übertragung eines dieser Signale auf die Erregerseite erzwungen, wenn und soweit kein Defekt im Sinne des Drahtbruchs oder Fehlers vorliegt. Liegt dagegen ein Defekt vor, so ist das Übersetzungsverhältnis der Windungen (Statorwicklung zur Rotorwicklung oder umgekehrt) gleich Null und die Spannung an dem Eingangsverstärker, welcher an die Erregerwicklung anschließt, wird ebenfalls Null. Der Regelkreis würde wirkungslos werden, respektive wird ihm ein Messsignal suggeriert, das einen eingeschwungenen Zustand zeigt, obwohl ein technischer Fehler im Resolver vorliegt.

Das Wegschalten der Trägerfrequenz des Generators würde indes den Regler stören. Während dieser Zeit wird also der Regler angehalten, was durch einen Schalter geschieht. Er öffnet die Rückführung, und beendet damit temporär die Regelung.

Das Einspeisen eines Null-Signals als Regelfehler im Sinne einer nicht erhaltenen Signalspannung an der rotierenden Wicklung zeigt dem Regelkreis, dass ein eingeschwungener Zustand vorliegt, weil der Sollwert des Regelkreises als Nachlaufregelung ausgestaltet ist und als Sollwert Null erhält. Während dieser "Ruhigstellung" oder während des Anhaltens des Reglers, zu dem keine Messungen ausgeführt werden, prüft das Störsignal durch Wegschalten eines der beiden Wechselsignale an jeweils einer der beiden Statorwicklungen, ob das Übersetzungsverhältnis der Windungen des Drehtransformators (sinngemäß des Resolvers) noch funktionsfähig und vorhanden ist, was durch Anzeigen einer Spannung am Ausgangs des Eingangsverstärkers dargestellt wird, welche Spannung von einer Schaltung erkannt wird, die als Störerkennungsschaltung oder Signalauswertungsschaltung zu beschreiben ist. Ihr ist für ihre Aktivierung das Störsignal zugeführt, so dass sie weiß, wann sie einen Fehler detektieren kann, und ihr wird auch das Ausgangssignal des Eingangsverstärkers zugeführt, um feststellen zu können, ob ein wünschenswert vorliegendes Signal am Eingangsverstärker eintrifft. Während dieser Zeitspanne des Störzustandes, also des Vorliegens des Störsignals, wird der Regler außer Funktion gesetzt, aber nur so, dass er keine Einschwingvorgänge ausübt oder ausregelt.

Das Senden von zwei Stellgrößen an die Statorwicklung des Drehwinkelaufnehmers sind winkelabhängige, amplitudenmodulierte Frequenzsignale, die von einem Amplitudenmodulator bereitgestellt werden. Das Senden ist so zu verstehen, dass diese Stellgrößen von dem Amplitudenmodulator als Sinusgröße und Cosinusgröße für eine Sinuswicklung und eine Cosinuswicklung des Drehwinkelaufnehmers bereitgestellt werden.

Das als Folge entstehende Signal an der rotierenden Wicklung, im Vorwärtsbetrieb als Erregerwicklung benannt, im Rückwärtsbetrieb als Empfangswicklung verwendet, bildet eine Signalreaktion, die vom Regelkreis im Normalzustand, also bei funktionsfähigem Resolver ausgeregelt wird, so dass das Ausgangssignal an der Erregerwicklung zu Null wird. Auch hier ist ein Wechselsignal gemeint, welches Wechselsignal nicht vorhanden ist und keinen Effektivwert besitzt.

Die Auswertung am Eingangsverstärker sorgt funktionsgemäß für den Nachlaufregler und den vorhandenen Regelkreis dafür, dass die Regeldifferenz Null wird, und das Ausgangssignal am Eingangsverstärker, der der Empfangswicklung nachgeordnet ist, zu Null geregelt wird.

Eine funktionsgemäße Generierung (zweites Merkmal) wird gemäß drittem und viertem Merkmal des Anspruchs 1 zu einer "nicht funktionsgemäßen" Generierung. Wird das Störsignal generiert, kann kurzzeitig - für die Zeitdauer der Störung - nicht von einer funktionsgemäßen Generierung eines Ausgangssignals an der "Erregerwicklung", verwendet als Empfangswicklung, gesprochen werden. Gleichwohl ist sinngemäß auch hier eine Auswertung vorhanden, die über denselben Eingangsverstärker stattfindet, der ein Ausgangssignal abgibt, das Null ist, wenn ein Fehler oder ein Bruch im System vorliegt. Es wäre nicht Null, wenn die Stellgrößensignale funktionsgemäß generiert werden und das Störsignal nicht aktiv eingreift.

Ausdruck dessen, dass der Regelkreis eingreift, ist die Regelung zu Null an der Erregerwicklung, die erfindungsgemäß als Empfangswicklung verwendet wird, was als Normalbetrieb bezeichnet wird.

Das Rückwärtsverfahren oder die Verwendung eines Resolvers im Rückwärtsverfahren kommt dadurch zum Ausdruck, dass zwei Stellgrößen an die Statorwicklungen "gesendet werden" (in sie eingespeist werden) und die Signalreaktionen an der Erregerwicklung, verwendet als Empfangswicklung, ausgewertet wird, wozu der Eingangsverstärker dient. Dieser funktionsgemäße Zustand mit dem Nachlauf-Regelkreis (Anspruch 5) verwendet einen Differenzbildner, den Regler selbst, einen Integrator und einen Amplitudenmodulator. Dieser besitzt zwei Signalblöcke, einen für Cosinus und einen für Sinus, wie auch zwei Multiplikationsstellen zur Modulation mit dem Trägersignal. Dieses Trägersignal wird von einem Frequenzgenerator abgegeben, der "Trägerfrequenzgenerator" genannt wird. Über zwei getrennte Verstärker werden die Statorwicklungen des Resolvers bedient, welche als zwei zueinander orthogonale Wicklungen in dem Drehwinkelaufnehmer angeordnet sind.

Das induzierte Signal in der Erregungswicklung, verwendet als Empfangswicklung, wird dem Eingangsverstärker zugeleitet, der für den eingeschwungenen Zustand ein Null-Ausgangssignal als "kein Wechselsignal" abgibt, und einem Demodulator zuführt, welcher in der Rückführung den geschlossenen Regelkreis zum Differenzbildner bildet. Hier ist ein funktionell wirkender Schalter vorgesehen, der den Regelkreis anhält. Das Anhalten erfolgt durch Vorgabe eines eingeschwungenen Zustands für den Differenzbildner. Das Anhalten sorgt dafür, dass der Regelkreis von der eingespeisten Störgröße nicht beeinflusst wird. Während dieser Zeit sorgt eine Fehlererkennung (Anspruch 6) für eine Erkennung des Signals am Ausgang des Eingangsverstärkers. Während der definierten Zeiten, also während der Zeitdauer eines Störsignals sollte hier ein Signal als Wechselsignal anliegen, welches ungleich Null ist. Sinngemäß findet sich das Störsignal im Eingangssignal des Eingangsverstärkers wieder, aber in umgekehrter Denkrichtung.

Das Wegschalten eines der Stellgrößensignale oder ihrer Trägerfrequenz sorgt dafür, dass zugehörig am Eingangsverstärker ein Wechselsignal ansteht, wenn der Resolver technisch in Ordnung ist und kein Fehler oder Bruch in diesem System vorliegt.

Die Fehlererkennung hat eine Signalauswertung (Anspruch 1), die das genannte Eingangssignal des Eingangsverstärkers, oder sein Ausgangssignal auswertet (nach Durchlauf durch den Demodulator und während der Regelkreis deaktiviert ist). Diese temporäre Deaktivierung entspricht der Generierung des Störsignals im Sekundenrhythmus. Erkennt die Fehlererkennung kein Vorliegen einer Ausgangsspannung am Eingangsverstärker während der Aktivzeit des Störsignals, gibt sie ein Fehlersignal oder eine Fehlermeldung F ab.

Der Schalter kann im Zweig der Rückkopplung des Reglers angeordnet sein. Er blockiert oder schaltet das gemessene Signal ab (Anspruch 8). Bevorzugt kann er während des Einwirkens des Störsignals ein Nullsignal an den Differenzbildner des Regelkreises abgeben.

Vorteilhafte Ausgestaltungen ergeben sich aus den abhängigen Ansprüchen.

Die Erfindung wird nachfolgend anhand der Zeichnung an Schaltungs**beispielen** und anhand von Verfahren zu diesen Beispielen näher erörtert (offenbart und erläutert).

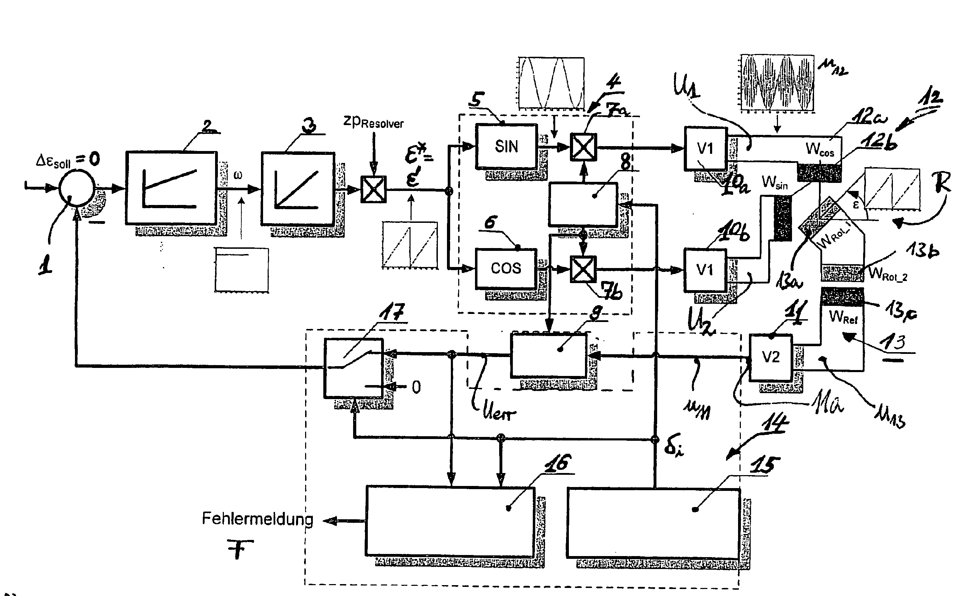

- Fig. 1: ist eine schematische Darstellung einer Überwachungsvorrichtung mit Resolver R.

Die Vorrichtung zur Überwachung eines Drehwinkelaufnehmers R an einer elektrischen Maschine besteht aus einem Regeldifferenzbildner 1, einem Regler 2 und einem Integrator 3, der mit dem Amplitudenmodulator 4 verbunden ist.

Der Amplitudenmodulator 4 besteht aus einem Sinussignalblock 5 und einem Cosinussignalblock 6, sowie Multiplikationsstellen 7a und 7b, sowie einem Trägerfrequenzgenerator 8. Letzterer ist über Verstärker V1 als 10a und 10b mit den (ruhenden) Wicklungen Wₛᵢₙ, W_{cos} (Statorwicklungen 12, als 12a und 12b) des Drehwinkelaufnehmers R verbunden.

Das Signal der Erregungswicklung W_{Ref} als drehende Wicklung 13 ist über den Eingangsverstärker V2 (oder 11) auf einen Demodulator 9 geführt.

Es ist ein Fehlererkennungsblock 14 vorgesehen, der aus dem Störsignalgenerator 15, aus einem Signalauswertungsblock 16 und aus einer Schalteinrichtung als Schalter 17 besteht und mit dem Trägerfrequenzgenerator 8 zur Vermittlung von Signalen δᵢ, i = 1,2,..n verbunden ist. Ebenso ist der Störsignalgenerator 15 mit der Schalteinrichtung 17 gekoppelt. Ebenso wird δᵢ zu der Fehlererkennung 16 gekoppelt.

Das Ausführungsbeispiel in Fig. 1 zeigt ein ÜberwachungsVerfahren im Rückwärtsverfahren (Rückwärtsbetrieb), wobei der Drehwinkelaufnehmer als Resolver ausgebildet ist und die orthogonalen Wicklungen 12a, 12b des Resolverstators so bestromt werden, dass in die - als Empfangswicklung verwendete - Erregerwicklung W_{Ref} des Resolvers kein Signal übertragen wird. Dabei setzen sich die Statorspannungen aus einem Trägerfrequenzanteil und einem drehwinkelabhängigen Verstärkungsfaktor zusammen (vgl. die jeweiligen Signaldiagramme in der Figur).

Der Regelkreis für die Statorwicklungen ist wie folgt aufgebaut.

Der drehwinkelabhängige Verstärkungsfaktor wird durch einen Regler 2 mit nachgeschaltetem Integrator 3 bestimmt. Als Eingangsgröße erhält der Regler 2 die Differenz aus Sollwert und demodulierter Spannung Uₑᵣᵣ der drehenden Erregerwicklung 13a des Resolvers. Als Ausgangsgröße liefert der Regler 2 eine Drehzahl, die im nachgeschalteten Integrator 3 zu einem Winkel ε' (oder ε*) aufintegriert wird. Ist der Regelkreis ausgeregelt (funktionsgemäß betrieben), dann entspricht der ermittelte Winkel ε' dem realen Winkel ε und die demodulierte Spannung Uₑᵣᵣ wird Null Volt (als Wechselspannung).

Die Erregerwicklung 13a, kann eine Gruppe von Wicklungen 13a, 13b und 13c sein. Deren Messsignal u₁₃ liegt am Eingangsverstärker 11 an.

### Folgende Gleichungen beschreiben diese Zusammenhänge

| | |
|---|---|
| Drehwinkel des Rotors: | ε |
| Ermittelter Drehwinkel: | ε' |
| Trägerfrequenzsignal: | *Uₜ =û·*sin(ω·*t*) |
| Signale der Statorwicklungen: | *U*₁=*û*·sin(ω·*t*)·cos ε' |
| | *U*₂ = *û*·sin(ω·*t*)·sin ε' |
| Signal an der Erregerwicklung: | *Uₑᵣᵣ*=(*U*₁·sinε+*U*₂·cosε)·*ü* |
| Windungs-Übersetzungsverhältnis: | ü |

Im ausgeregelten Zustand ist ε = ε'. Damit ergibt sich
*Uₑᵣᵣ* = (*û*· sin(ω· *t*)· cosε'·sinε+*û*· sin(ω· *t*)· sin ε'·cosε)· *ü*
*Uₑᵣᵣ* =*û*·sin(ω·*t*)·(cosε'·sinε+sin ε'·cosε)· *ü*
*Uₑᵣᵣ* = *û*· sin(ω·*t*)· (sin(ε'-ε))· *ü*
*Uₑᵣᵣ* = 0, *wenn* ε'≈ε

Wenn beispielsweise durch einen Defekt im Rotor des Resolvers R ü=0 wird, dann wird Uₑᵣᵣ ebenfalls Null und der Regelkreis wird wirkungslos, ohne dass dies erkennbar ist.

Um dieses Problem zu lösen sollen die Signale U₁ und U₂ alternierend auf 0 gesetzt und damit eine Übertragung auf die "Erregerseite" (als Messwicklung 13) erzwungen werden. Dies erfolgt im Sekundenrhythmus mit Impulssignalen δᵢ des Störsignalgenerators 15.

Setzt man ein Signal, entweder U₁ oder U₂, auf Null, dann ergibt sich folgendes Uₑᵣᵣ

| | |
|---|---|
| *U*₁ = 0 : | *Uₑᵣᵣ* = *û*· sin(ω· *t*)· (sin ε'·cosε)· *ü* |
| *U*₂ = 0 : | *Uₑᵣᵣ* = *û*· sin(ω· *t*)· (cosε'·sin ε)· *ü* |

Ist ü ≠ 0 (der Resolver ist elektrisch in Ordnung), dann wird während einem Störsignal δᵢ das gemessene Uₑᵣᵣ ebenfalls ≠ 0 → es lässt sich von Block 16 auswerten. Dieser ist zur zeitlichen Koordination mit dem Störsignalgenerator 15 gekoppelt.

Da auch der Winkel ε dazu führen kann, dass der Faktor cos ε oder sin ε zu Null wird, wird diese Unsicherheit durch ein alternierendes Nullsetzen von U1 und U2 umgangen.

Da das Wegschalten (als Störsignal) der Trägerfrequenz des Trägerfrequenzgenerators 8 für eine der beiden Stellgrößen U₁, U₂ die Demodulation des Demodulators 9 und damit den Regler 2 stört, wird während dieser Zeit (dem Wegschalten der Trägerfrequenz) die Regelung "angehalten". Dies geschieht durch den Schalter 17. Er öffnet die Rückführung und beendet "temporär" die Regelung. Dazu kann ein Wechselschalter Null als Messsignal in die Differenzstelle 11 einspeisen. Zusätzlich kann die Dauer des Wegschaltens an die Filtereigenschaften des elektrischen Systems angepasst werden, um Einschwingvorgänge zeitlich zu verkürzen.

Die Signalnamen u₁₁, u₁₂, u₁₃ und andere ergeben sich aus der Figur und dem dort gezeigten Ort ihrer Entstehung.

## Patentansprüche

1. **Verfahren zur Überwachung** eines mit einem Regelkreis (1,2,3) betriebenen Resolvers (R) an einer elektrischen Maschine, durchgeführt mit den Schritten
- Senden zweier Stellgrößensignale als winkelabhängige, amplitudenmodulierte Trägerfrequenzsignale auf Statorwicklungen (12a,12b; Wₛᵢₙ,W_{cos}) des Resolvers (R);
- Auswertung einer Trägerfrequenzsignal-Reaktion über einen Eingangsverstärker (V2,11), der am Ausgang ein Ausgangssignal abgibt, welches im Wesentlichen Null ist, wenn die Stellgrößensignale funktionsgemäß im Regelkreis generiert werden, wobei Spannungsamplituden an den Statorwicklungen (12a,12b) des Resolvers im Normalbetrieb regelnd so korrigiert werden, dass eine induzierte Spannung an einer Erregerwicklung als Empfangswicklung (13) zu Null geregelt wird;
- Generierung eines Störsignals (δᵢ;i=1,...n) im Sekundenrhythmus, alternierend in beiden oder für beide Statorwicklungen (12a,12b) des Resolvers (R);
- wobei als Folge des Störsignals ein Anzeigesignal (u₁₁) für eine Störung am Ausgang des Eingangsverstärkers (V2) ansteht, als ein Signal ungleich Null, wenn kein Fehler oder kein Drahtbruch vorliegt, und als ein Signal gleich Null, wenn ein Fehler oder ein Drahtbruch im System des Resolvers (R) vorliegt;
- und wobei eine Fehlererkennung (14) eine Signalauswertung (16) aufweist, die das Anzeigesignal (u₁₁) des Eingangsverstärkers auswertet, während der regelnde Regelkreis (1,2,3) über einen Schalter (17) temporär deaktiviert ist, und ein Signal (F) zur Fehlererkennung abgibt.

2. Verfahren zur Überwachung nach Anspruch 1, wobei die Fehlererkennung (14) für eine Sicherheitsauswertung und Überwachung des Resolvers genutzt wird.

3. Verfahren nach Anspruch 1, wobei das Ausgangssignal des Verstärkers (11) bei funktionsgemäßer Generierung der Stellgrößen ein Wechselsignal ist, das im Wesentlichen Null ist.

4. Verfahren zur Überwachung nach Anspruch 1, wobei ein in die Erregerwicklung als Empfangswicklung (W_{Ref}, 13) induziertes Signal über den Eingangsverstärker (V2, 11) und einen Demodulator (9) geführt wird und damit eine Rückführung eines geschlossenen Regelkreises bildet.

5. Verfahren zur Überwachung nach Anspruch 1, wobei der Resolver (R) im Rückwärtsverfahren betrieben wird und an eine elektrischen Maschine gekoppelt ist, der Regelkreis mit einem Regeldifferenzbildner (1), einem Regler (2), der über einen Integrator (3) mit einem Amplitudenmodulator (4) verbunden ist, wobei der Amplitudenmodulator eine Sinuserzeugung (5), eine Cosinuserzeugung (6) und zwei Multiplikationstellen (7a,7b) sowie einen Trägerfrequenzgenerator_(8) aufweist und über zwei Verstärker (V1;10a,10b) die Statorwicklungen (12a,12b) des Resolvers mit Strom versorgt.

6. Verfahren zur Überwachung nach Anspruch 5, wobei eine Fehlererkennung (14) vorgesehen ist, welche mit Hilfe eines Störsignalgenerators (15) während definierter Zeiten Störsignale im Sekundenrhythmus in den Trägerfrequenzgenerator (8) einkoppelt, wodurch je eines der vom Trägerfrequenzgenerator abgegebenen Trägerfrequenzsignale gestört oder zu Null gesetzt wird.

7. Verfahren zur Überwachung nach Anspruch 6, wobei sich das nicht gestörte Trägerfrequenzsignal im Eingangssignal des Eingangsverstärkers (V2,11) wiederfindet oder ein Eingangssignal als Wechselsignal (u₁₁) am Eingangsverstärker erzeugt.

8. Verfahren zur Überwachung nach Anspruch 1, wobei der Schalter (17) in einem Rückkopplungszweig des Regelkreises eine Rückführung des gemessenen Signals von der rotierenden Wicklung (13) des Resolvers (R) blockiert oder abschaltet.

9. Verfahren zur Überwachung nach Anspruch 1 oder 8, wobei der Schalter (7) ein Wechselschalter ist.

10. Verfahren nach Anspruch 1, wobei das Ausgangssignal des Eingangsverstärkers (11) während einer Dauer des Störsignals ein Wechselsignal ist.

11. **Schaltungsanordnung** zur Überwachung eines Drehwinkelaufnehmers als Resolver an einer elektrischen Maschine, die Schaltungsanordnung bestehend aus einem Regeldifferenzbildner (1), einem Regler (2), der über einen Integrator (3) mit einem Amplitudenmodulator (4), der aus einem Sinussignalblock (5), einem Cosinussignalblock (6), aus zwei Multiplikationsstellen (7a,7b) und einem Trägerfrequenz-Generator (8) besteht, verbunden ist, wobei der Generator (8) über zwei Verstärker (V1;10a,10b) mit Statorwicklungen (Wₛᵢₙ,W_{cos}, 12) des Drehwinkelaufnehmers verbindbar ist, dessen Erregerwicklung (W_{Ref}, 13) über den Eingangsverstärker (V2,11) mit einem Demodulator (9) verbindbar ist,
**gekennzeichnet durch** einen Fehlererkennungsblock (14), der einen Störsignal-Generator (15), einen Signalauswertungsblock (16) und eine Schalteinrichtung (17) aufweist, wobei der Fehlererkennungsblock (14) mit dem Trägerfrequenz-Generator (8) verbunden ist und eine Störsignalerzeugung des Störsignal-Generators (15) mit der Schalteinrichtung (17) - zum zeitlichen Anhalten des Regelkreises aus Regler, Regeldifferenzbildner und Integrator (1,2,3) - gekoppelt ist.

12. Schaltungsanordnung zur Überwachung nach Anspruch 11, wobei der Drehwinkelaufnehmer als Resolver ausgebildet ist.

13. Schaltungsanordnung nach Anspruch 11, arbeitend nach einem Verfahren der Ansprüche 1 bis 10.

14. Schaltungsanordnung nach Anspruch 11, wobei der Störsignal-Generator (15) ausgebildet ist, Störsignale im Sekundenrhythmus an den Generator (8) abzugeben.

## Claims

1. Method for monitoring a resolver (R) operated using a control loop (1, 2, 3) on an electric machine, carried out using the steps
- transmitting two control variable signals as angle-dependent, amplitude-modulated carrier frequency signals to stator windings (12a, 12b; Wₛᵢₙ, W_{cos}) of the resolver (R);
- evaluation of a carrier frequency signal response via an input amplifier (V2, 11) which emits an output signal at the output which is essentially zero when the control variable signals are generated in the control loop according to function, wherein voltage amplitudes at the stator windings (12a, 12b) of the resolver are corrected in regulating manner in normal operation so that an induced voltage at an exciting winding as a receiving winding (13) is regulated to zero;
- generating an interference signal (δᵢ; i=1, ...n) at one-second intervals, alternately in both or for both stator windings (12a, 12b) of the resolver (R);
- wherein as a result of the interference signal, a display signal (u₁₁) for an interference is present at the output of the input amplifier (V2), as a signal not equal to zero when no error or no wire breakage exists, and as a signal equal to zero when an error or a wire breakage exists in the system of the resolver (R);
- and wherein error detection (14) has signal evaluation (16) which evaluates the display signal (u₁₁) of the input amplifier, while the regulating control loop (1, 2, 3) is temporarily deactivated via a switch (17), and emits a signal (F) for error detection.

2. Method for monitoring according to claim 1, wherein the error detection (14) is used for safety evaluation and monitoring of the resolver.

3. Method according to claim 1, wherein the output signal of the amplifier (11) during generation of the control variables according to function is an alternating signal which is essentially zero.

4. Method for monitoring according to claim 1, wherein a signal induced into the exciting winding as a receiving winding (W_{Ref}, 13) is guided via the input amplifier (V2, 11) and a demodulator (9) and hence forms a feedback of a closed control loop.

5. Method for monitoring according to claim 1, wherein the resolver (R) is operated in a backward mode and is coupled to an electric machine, the control loop having a control differential former (1), a regulator (2), which is connected to an amplitude modulator (4) via an integrator (3), wherein the amplitude modulator has a sine generator (5), a cosine generator (6) and two multiplication points (7a, 7b) and a carrier frequency generator (8) and supplies the stator windings (12a, 12b) of the resolver with current via two amplifiers (V1; 10a, 10b).

6. Method for monitoring according to claim 5, wherein error detection (14) is provided which, with the aid of an interference signal generator (15), during defined times couples interference signals at one-second intervals into the carrier frequency generator (8), as a result of which in each case one of the carrier frequency signals emitted by the carrier frequency generator is disturbed or set to zero.

7. Method for monitoring according to claim 6, wherein the non-disturbed carrier frequency signal is found in the input signal of the input amplifier (V2, 11) or generates an input signal as an alternating signal (u₁₁) at the input amplifier.

8. Method for monitoring according to claim 1, wherein the switch (17) in a feedback branch of the control loop blocks or switches off feedback of the measured signal from the rotating winding (13) of the resolver (R).

9. Method for monitoring according to claim 1 or 8, wherein the switch (7) is an alternating switch.

10. Method according to claim 1, wherein the output signal of the input amplifier (11) during a period of the interference signal is an alternating signal.

11. Circuit arrangement for monitoring a rotational angle sensor as a resolver on an electric machine, the circuit arrangement consisting of a control differential former (1), a regulator (2), which is connected via an integrator (3) to an amplitude modulator (4), which consists of a sine signal block (5), a cosine signal block (6), of two multiplication points (7a, 7b) and a carrier frequency generator (8), wherein the generator (8) can be connected via two amplifiers (V1; 10a, 10b) to stator windings (Wₛᵢₙ, W_{cos}, 12) of the rotational angle sensor, the exciting winding (W_{Ref}, 13) of which can be connected to a demodulator (9) via the input amplifiers (V2, 11), **characterised by** an error-detection block (14) which has an interference signal generator (15), a signal-evaluation block (16) and a switch device (17), wherein the error-detection block (14) is connected to the carrier frequency generator (8) and interference signal generation of the interference signal generator (15) is coupled to the switch device (17) - for temporary stopping of the control loop comprising regulator, control differential former and integrator (1, 2, 3).

12. Circuit arrangement for monitoring according to claim 11,
wherein the rotational angle sensor is designed as a resolver.

13. Circuit arrangement according to claim 11, operating according to a method of claims 1 to 10.

14. Circuit arrangement according to claim 11, wherein the interference signal generator (15) is designed to emit interference signals to the generator (8) at one-second intervals.

## Revendications

1. Procédé de surveillance d'un résolveur (R) fonctionnant avec un circuit de régulation (1, 2, 3) sur une machine électrique, exécuté avec les étapes suivantes:
- envoyer deux signaux de grandeurs de réglage comme signaux de fréquence porteuse modulés en amplitude et dépendant de l'angle sur des enroulements de stator (12a, 12b; Wₛᵢₙ, W_{cos}) du résolveur (R);
- analyser une réaction de signal de fréquence porteuse au moyen d'un amplificateur d'entrée (V2, 11), qui fournit à la sortie un signal de sortie qui est sensiblement zéro, lorsque les signaux de grandeurs de réglage sont générés de façon fonctionnelle dans le circuit de régulation, dans lequel on corrige de façon régulée en fonctionnement normal des amplitudes de tension aux enroulements de stator (12a, 12b) du résolveur, de telle manière qu'une tension induite sur un enroulement d'excitateur comme enroulement de réception (13) soit régulée à zéro;
- générer un signal parasite (□ᵢ; i=1, ..., n) au rythme d'une seconde, en alternance dans les deux ou pour les deux enroulements de stator (12a, 12b) du résolveur (R);
- dans lequel, à la suite du signal parasite, il apparaît à la sortie de l'amplificateur d'entrée (V2), un signal d'affichage (u₁₁) pour une panne, sous la forme d'un signal non égal à zéro, lorsqu'il n'y a pas de défaut ou de rupture de fil, et sous la forme d'un signal égal à zéro, lorsqu'il y a un défaut ou une rupture de fil dans le système du résolveur (R);
- et dans lequel une reconnaissance de défaut (14) présente une analyse de signal (16), qui analyse le signal d'affichage (u₁₁) de l'amplificateur d'entrée, tandis que le circuit de régulation (1, 2, 3) en cours de régulation est désactivé temporairement par un interrupteur (17), et fournit un signal (F) pour la reconnaissance de défaut.

2. Procédé de surveillance selon la revendication 1, dans lequel la reconnaissance de défaut (14) est utilisée pour une analyse de sécurité et la surveillance du résolveur.

3. Procédé selon la revendication 1, dans lequel le signal de sortie de l'amplificateur (11) est un signal alternatif, qui est sensiblement zéro, lors de la génération fonctionnelle des grandeurs de réglage.

4. Procédé de surveillance selon la revendication 1, dans lequel on conduit un signal induit dans l'enroulement d'excitateur comme enroulement de réception (W_{Ref}, 13) via l'amplificateur d'entrée (V2, 11) et un démodulateur (9) et on forme ainsi un retour d'un circuit de régulation fermé.

5. Procédé de surveillance selon la revendication 1, dans lequel le résolveur (R) est utilisé en procédé inverse et est couplé à une machine électrique, le circuit de régulation est relié à un générateur de différence de réglage (1), à un régulateur (2), qui est relié à un modulateur d'amplitude (4) via un intégrateur (3), dans lequel le modulateur d'amplitude présente une production sinusoïdale (5), une production cosinusoïdale (6) et deux points de multiplication (7a, 7b) ainsi qu'un générateur de fréquence porteuse (8) et fournit, au moyen de deux amplificateurs (V1; 10a, 10b), du courant aux enroulements de stator (12a, 12b) du résolveur.

6. Procédé de surveillance selon la revendication 5, dans lequel il est prévu une reconnaissance de défaut (14), qui injecte des signaux parasites au rythme d'une seconde, pendant des temps définis, dans le générateur de fréquence porteuse (8) à l'aide d'un générateur de signal parasite (15), ce qui permet de perturber ou d'amener à zéro chaque fois un des signaux de fréquence porteuse émis par le générateur de fréquence porteuse.

7. Procédé de surveillance selon la revendication 6, dans lequel le signal de fréquence porteuse non perturbé se retrouve dans le signal d'entrée de l'amplificateur d'entrée (V2, 11) ou produit un signal d'entrée comme signal alternatif (u₁₁) à l'amplificateur d'entrée.

8. Procédé de surveillance selon la revendication 1, dans lequel l'interrupteur (17) bloque ou coupe dans une branche de rétro-couplage du circuit de régulation un retour du signal mesuré de l'enroulement rotatif (13) du résolveur (R).

9. Procédé de surveillance selon la revendication 1 ou 8, dans lequel l'interrupteur (7) est un commutateur de sélection.

10. Procédé selon la revendication 1, dans lequel le signal de sortie de l'amplificateur d'entrée (11) est un signal alternatif pendant une durée du signal parasite.

11. Agencement de circuit pour la surveillance d'un capteur d'angle de rotation sous forme de résolveur sur une machine électrique, l'agencement de circuit se composant d'un générateur de différence de réglage (1), d'un régulateur (2), qui est relié via un intégrateur (3) à un modulateur d'amplitude (4), qui se compose d'un bloc de signal sinusoïdal (5), d'un bloc de signal cosinusoïdal (6), de deux points de multiplication (7a, 7b) et d'un générateur de fréquence porteuse (8), dans lequel le générateur (8) peut être relié via deux amplificateurs (V1; 10a, 10b) à des enroulements de stator (Wₛᵢₙ, W_{cos}, 12) du capteur d'angle de rotation, dont l'enroulement d'excitateur (W_{Ref}, 13) peut être relié à un démodulateur (9) via l'amplificateur d'entrée (V2, 11), **caractérisé par** un bloc de reconnaissance de défaut (14), qui présente un générateur de signal parasite (15), un bloc d'analyse de signal (16) et un dispositif de commutation (17), dans lequel le bloc de reconnaissance de défaut (14) est relié au générateur de fréquence porteuse (8) et une production de signal parasite du générateur de signal parasite (15) est couplée au dispositif de commutation (17) - pour la coupure temporaire du circuit de régulation composé du régulateur, du générateur de différence de réglage et de l'intégrateur (1, 2, 3).

12. Agencement de circuit de surveillance selon la revendication 11, dans lequel le capteur d'angle de rotation est réalisé sous la forme d'un résolveur.

13. Agencement de circuit selon la revendication 11, opérant selon un procédé des revendications 1 à 10.

14. Agencement de circuit selon la revendication 11, dans lequel le générateur de signal parasite (15) est conçu pour fournir au générateur (8) des signaux parasites au rythme d'une seconde.
